# EUROPEAN PATENT SPECIFICATION

(11) **EP 0 994 554 B1**
(45) Date of publication and mention of the grant of the patent: **30.08.2006**
(21) Application number: 99402460.2
(22) Date of filing: 07.10.1999
(51) Int. Cl.: H02K 13/10, H02K 13/04, H02K 13/00, H01R 39/06

(54) **Commutator and method of manufacturing the same**
Kommutator und Methode zu seiner Herstellung
Commutateur et méthode de sa fabrication

(30) Priority: 13.10.1998 JP 29101298
(43) Date of publication of application: 19.04.2000
(73) Proprietor: Mitsuba Corporation, Kiryu-shi, Gunma 376-8555 (JP)
(72) Inventor: Yamazaki, Kazuhiro, Kiryu-shi, Gunma (JP); Isoda, Minoru, Kiryu-shi, Gunma (JP); Yajima, Mitsuru, Kiryu-shi, Gunma (JP); Hiruma, Hiroshi, Kiryu-shi, Gunma (JP); Uehara, Shuji, Kiryu-shi, Gunma (JP)
(74) Representative: Rousset, Jean-Claude

(56) References cited:
- EP-A- 0 068 908
- DE-U1- 9 318 458
- FR-A- 2 412 184
- GB-A- 1 449 670
- JP-A- 7 054 727
- JP-A- 58 058 849
- US-A- 2 421 845
- US-A- 4 402 130
- US-A- 5 629 576
- PATENT ABSTRACTS OF JAPAN vol. 1996, no. 9, 30 September 1996 (1996-09-30) -& JP 08 126259 A (NANSHIN SEIKI SEISAKUSHO KK), 17 May 1996 (1996-05-17)
- PATENT ABSTRACTS OF JAPAN vol. 1996, no. 9, 30 September 1996 (1996-09-30) -& JP 08 126258 A (NANSHIN SEIKI SEISAKUSHO KK), 17 May 1996 (1996-05-17)
- PATENT ABSTRACTS OF JAPAN & JP 58 58849 A (NIPPON RADIATOR CO LTD), 7 April 1983 (1983-04-07)

## Description

### BACKGROUND OF THE INVENTION

### 1. Field of the Invention

This invention relates to a commutator and a method of manufacturing the same. More particularly, the present invention relates to a commutator having a brush contact surface that is a plane perpendicular relative to the rotary shaft thereof and adapted to be effectively used for a starter motor of an engine.

### 2. Related Art Statement

Starter motors of engines having a commutator with the brush contact surface directed perpendicularly relative to the rotary shaft are known to reduce the radial dimension.

In the commutator of this known type, a plurality of sector-like segments are arranged annularly and insulated from each other. The segments are integrally held by a molded base that is made of resin. A riser is formed along the outer peripheral edge of each segment. Then, the riser is electrically connected to a coiled wire.

GB-A-449670 discloses a planar commutator of this type having the features of the preamble of claim 1. Copper bars that form the segments have a foot at their inner end and a ledge near their outer end. The bars are arranged around an inner tube and resin is moulded around the feet of the bars and between them, so that the bars are mounted in the resin and insulated by it from one another. The resin extends over the radial cylindrical faces of the ledges providing a continuous cylindrical surface on which a pre-load ring is shrunk.

FR-A-2412184 discloses a commutator and a method of its manufacture having the features of the preamble of claim 3.

Such a commutator is generally manufactured in a manner as described below. Firstly, the base is molded on a disk-shaped blank having a half diameter equal to the radial dimension of each segment plus that of its riser. Then, the blank is cut along radial lines to produce a plurality of segments having respective risers arranged along the outer periphery by means of a slit cutter.

However, with the above described known method of manufacturing a commutator, both the risers and the segments have to be cut. Then, the cutting distance of each stroke of the slit cutter is rather long and hence the method requires a long total cutting time.

On the other hand, the risers are not molded from resin along the opposite axial edges so that the corresponding coiled wire may be axially inserted and fused. As any two adjacently located segments are cut along the slit separating them, their risers are normally more affected by the fusing operation because they are not reinforced by the resin of the base and hence mechanically not very strong. This problem is avoided only by giving rise to another problem of preparing thick segments and thick risers to make them mechanically sufficiently strong.

### SUMMARY OF THE INVENTION

Therefore, it is the object of the present invention to provide a commutator that can reduce the cutting distance of each stroke of the slit cutter and nevertheless shows an enhanced mechanical strength as well as a method of manufacturing such a commutator.

According to the present invention, there is provided a commutator as set out in claim 1.

On the other hand, according to the present invention, there is provided a method of manufacturing a commutator as set out in claim 3.

The above-described objects and other objects, and novel feature of the present invention will become apparent more fully from the description of the following description in conjunction with the accompanying drawings.

### BRIEF DESCRIPTION OF THE DRAWINGS

FIGS. 1A and 1B show a principal portion of the rotor of a stator motor to which an embodiment of commutator according to the invention is applied, FIG. 1A being a schematic plan view, FIG. 1B being a schematic cross sectional front view taken along line b-b in FIG. 1A.
FIGS. 2A and 2B show a blank that can be used for manufacturing a commutator as shown in FIGS. 1A and 1B, FIG. 2A being a schematic plan view, FIG. 2B being a schematic cross sectional front view taken along line b-b in FIG. 2A.
FIGS. 3A and 3B show the state after a base molding process, FIG. 3A being a schematic plan view, FIG. 3B being a schematic cross sectional front view taking along line b-b in FIG. 3A.
FIGS. 4A and 4B schematically illustrate the slit forming step of manufacturing the commutator, FIG. 4A being a schematic plan view, FIG. 4B being a schematic cross sectional front view taken along line b-b in FIG. 4A.
FIG. 5 is a partially cut out schematic front view of the state after press-fitting the rotary shaft.
FIGS. 6A and 6B schematically illustrate the fusing step, FIG. 6A being a schematic plan view, FIG. 6B being a schematic cross sectional front view taken along line b-b in FIG. 6A.
FIG. 7 is a partly cut out schematic front view showing the coating step.

### DESCRIPTION OF THE PREFERRED EMBODIMENT

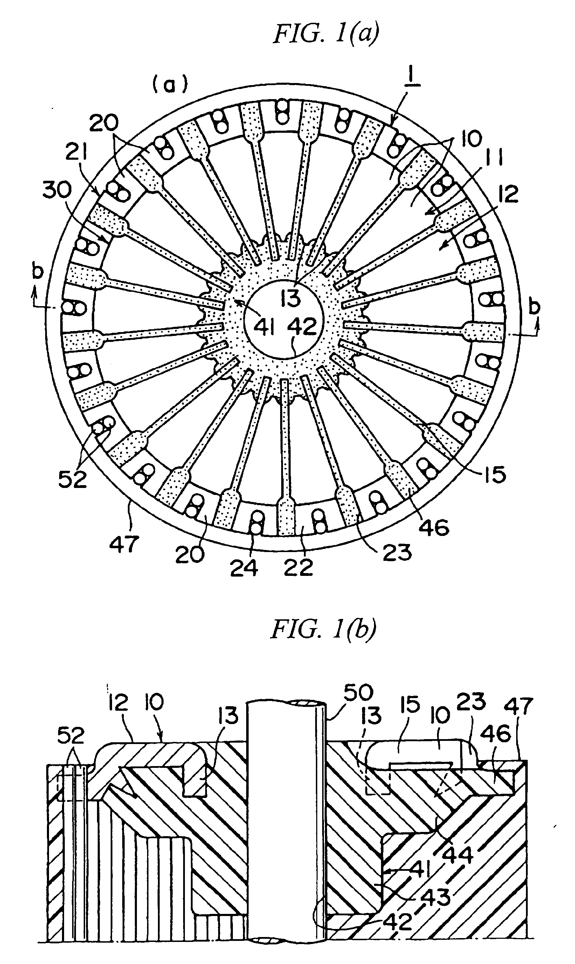

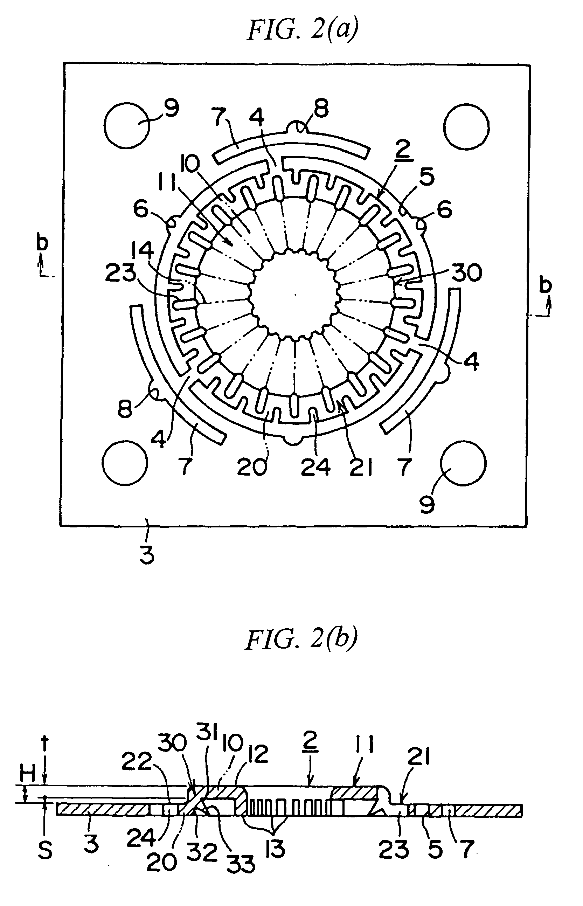

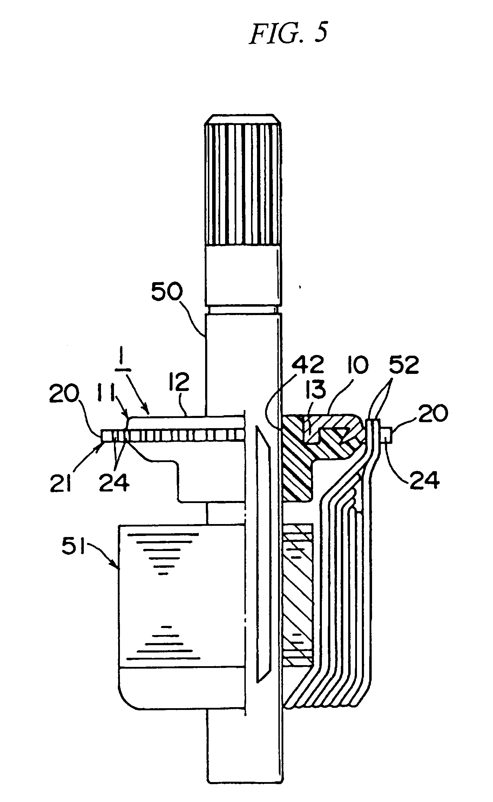

FIGS. 1A and 1B show a principal portion of the rotor of a stator motor to which an embodiment of commutator according to the invention is applied, FIG. 1A being a schematic plan view, FIG. 1B being a schematic cross sectional front view taken along line b-b in FIG. 1A. FIGS. 2A through FIG. 7 illustrate a method of manufacturing a commutator according to the invention.

The commutator of this embodiment is used for the rotor of the starter motor of an engine. The commutator has a flat profile formed on a plane and its brush contact surface is perpendicular relative to the rotary shaft thereof.

The commutator 1 of this embodiment comprises a base (base section) 41 showing a profile of a combination of two cylindrical columns having different diameters and made of resin that is an electric insulator, a plurality of sector-like segments 10 formed and arranged radially on the base 41 and a riser section 21 having risers 20 formed integrally with the respective segments 10 along the outer peripheral edges of the latter. The base has a shaft hole 42 bored through the center thereof, in which a rotary shaft 50 is placed by press-fitting.

As described in greater detail hereinafter, the segments 10 are produced by cutting a blank 2 sectorally along radial slits 15. The blank 2 is a disk-shaped copper plate produced by means of a press machine. The risers 20 are integrally formed with the respective segments 10 along the outer peripheral edges of the latter. A stepped section 30 is defined by the plane surface of the risers 20 and that of the segments 10. As a result, the plane surface of the risers 20 is recessed along the rotary shaft from the brush contact surface 12 formed by the plane surface of the segments 10. The segments 10 are arranged on the base 41 to show an annular contour. Then, the segments 10 are rigidly secured relative to each other to become integral with the base 41.

The risers 20 arranged along the outer peripheral edge of the respective segments 10 are radially and outwardly projecting from the outer periphery of the base 41. A groove 24 is cut into each of the risers 20 from the outer peripheral edge thereof. The ends 52 of a coiled wire are inserted into the groove 24, and they are electrically connected to the riser 20. The ends 52 of the coiled wire, electrically connected to the groove 24 of the riser 20 projected from the base 41, is extended to the axis of the rotary shaft and wound around armature 51.

Now, a method of manufacturing a commutator according to the invention and having a configuration as described above will be described below. Thus, the commutator will be described in greater detail in the following description.

Firstly, in a blank preparing step, a blank as shown in FIGS. 2A and 2B is prepared. FIGS. 2A and 2B show a blank that can be used for manufacturing a commutator as shown in FIGS. 1A and 1B, FIG. 2A being a schematic plan view, FIG. 2B being a schematic cross sectional front view taken along line b-b in FIG. 2A.

Referring to FIGS. 2A and 2B, the blank 2 is flat and disk-shaped. The blank 2 is arranged coaxially on a flat and square outer frame 3. Then, the blank 2 is suspended by means of three suspension bridges 4 arranged angularly at regular intervals along the outer periphery thereof. The blank 2, the outer frame 3 and the suspension bridges 4 are made of copper and produced integrally by means of a press machine. The bridges 4 are projected from the periphery of a circular hole 5 of the outer frame 3 and three aligning semicircular holes 6 are arranged angularly at regular intervals along the inner periphery of the hole 5. Arcuate slots 7 are cut through the outer frame 3 at positions outside the respective bridges 4. Three aligning semicircular holes 8 are arranged along the outer peripheries of the respective slots 7. Four circular aligning holes 9 are bored through the outer frame 3 respectively at the four corners thereof. Note that the bridges 4, the hole 5 and the slots 7 take the role of preventing the blank 2 from being deformed by stress in the course of press machining process.

The blank 2 comprises a segment section 11 and a riser section 21. The segment section 11 is used to form a plurality of segments 10 (a total of 21 in this embodiment) . The riser section 21 includes the same number of risers 20, each of which is integrally connected to the outer peripheral edge of the corresponding one of the segments 10. The segment section 11 and the riser section 21 are arranged annually and concentrically. More specifically, the riser section 21 is concentrically arranged outside the segment section 11.

A stepped section 30 is formed at the boundary of the segment section 11 and the riser section 21. The stepped section 30 is ring-shaped and concentric relative to the segment section 11 and the riser section 21. It is formed by means of a press machine (reducing mill) . The end face (hereinafter referred to as riser upper surface) of the riser section 21 at the brush contact surface side (to be referred to as upper side) of the commutator is axially recessed from the brush contact surface 12 defined by the segments 10 of the segment section 11 at the stepped section 30. The recessed distance from the brush contact surface 12 to the riser upper surface 22, or the height H of the brush contact surface 12 from the riser upper surface 22, is made greater than the thickness t of the blank 2 by a predetermined value of S. In other words, the stepped section 30 is designed to satisfy a relationship of H=t+S. The value S corresponds to the escape margin of the slit cutter required to cut only the segments 10 without cutting the riser upper surface 22 in the slit forming step as will be described hereinafter.

A plurality of inner anchors 13 are formed along the inner periphery of the segment section 11, the number of which is same as that of the segments 10. The anchor 13 of each of the segments 10 is bent substantially rectangularly from the inner peripheral edge of the segment 10 to move away from the brush contact surface 12. The anchor 13 is held to the base 41 and serves as claw for placing the corresponding segment 10 in position. Therefore, the anchor 13 is desirably mechanically strong. Additionally, the anchor 13 preferably forms an acute angle with the brush contact surface 12.

An outer anchor 33 is formed for each of the segments 10 along the inner peripheral surface of the stepped section 30. The anchor 33 projects radially inwardly from a position corresponding to the outer peripheral edge of the corresponding segment 10. The anchor 33 is formed by grinding a ground recession 32 at the inner peripheral surface of the stepped section 30. Thus, the anchor 33 is held by the base 41 to prevent the corresponding segment 10 from axially coming off.

The riser section 21 is provided with radially oblong preliminary slits 23 that are formed along imaginary lines 14 for slits for producing segments 10. Each of the slits 23 starts at a point located slightly inwardly from the outer periphery of the riser section 21 and extends to a point located slightly inwardly from the inner periphery of the riser section 21. Thus, the slit is formed by partly cutting the stepped section 30. Each of the risers 20 is provided with a groove 24 having a contour of a half of an ellipse and extending from the outer peripheral edge thereof. The groove 24 is located at the middle of the span separating two adjacent preliminary slits 23 and produced by means of punching press. The groove 24 has a width slightly greater than the diameter of the coiled wire to be inserted into it. The groove 24 has a length well for receiving two coiled wires 52, 52.

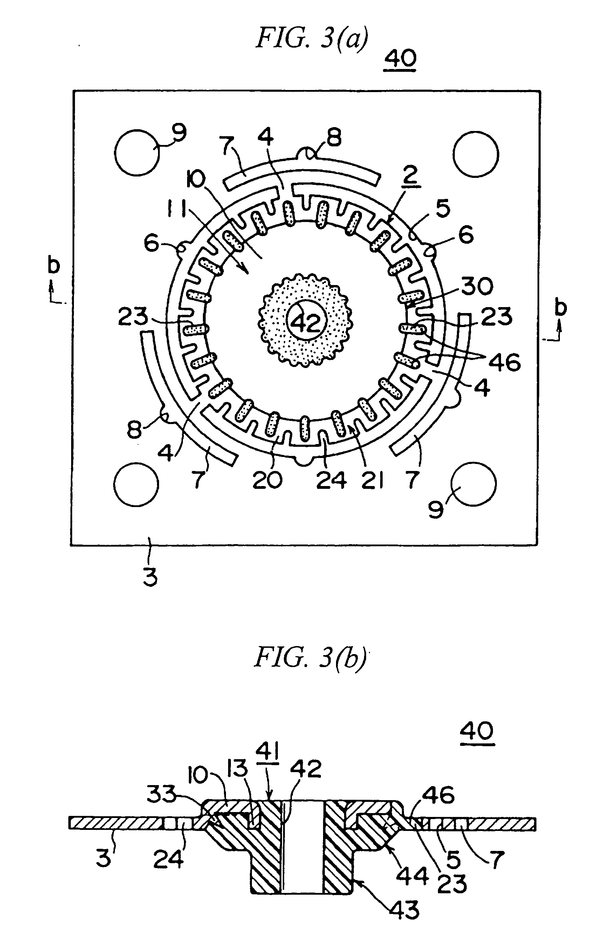

After press machining the blank 2 in a manner as described above, a base 41 made of synthetic resin is fitted to it by molding as shown in FIGS. 3A and 3B. More specifically, the base 41 is formed in a base molding step using an insulating synthetic resin material. FIGS. 3A and 3B show the state after the base molding process, FIG. 3A being a schematic plan view, FIG. 3B being a schematic cross sectional front view taking along line b-b in FIG. 3A.

In the case of the molded product 40 of FIGS. 3A and 3B, a base 41 having the form of a combination of two cylindrical columns with different diameters are arranged on the lower surface of the blank 2 opposite to the brush contact surface 12 thereof. The base 41 is made of resin that is an electric insulator and press molding produces it. An axial hole 42 is bored through the base 41 along the center line thereof so that the rotary shaft 50 can be placed therein by press-fitting. The upper surface of the small diameter section 43 of the base 41 is flush with the brush contact surface 12 of the segment section 11. The lower surface of the small diameter section 43 of the base 41 projects downward from the lower surface of the large diameter section 44 of the base 41. The outer periphery of the large diameter section 44 is formed within the outer periphery of the blank 2. The outer periphery of the riser section 21 protrudes from the outer periphery of the base 41.

The slits 23 of the blank 2 are filled with the resin of the base 41. Thus, a reinforcement section 46 is formed in each of the slits 23 by the resin filled therein. Note that, while the slits 23 are filled with the resin of the base 41, the grooves 24 formed along the outer periphery of the blank 2 are not filled with resin.

The anchor 13 of each of the segments 10 is rigidly held to the boundary area of the small diameter section 43 and the large diameter section 44 of the base 41. The anchor 13 is used to align the inner peripheral edge of the corresponding segment 10 relative to the base 41 and hold the segment 10 in position. The anchor 33 of each of the segments 10 is rigidly held to the outer periphery of the large diameter section 44 of the base 41. The anchor 33 is used to align the outer peripheral edge of the corresponding segment 10 relative to the base 41 and hold the segment 10 in position. Thus, the segment 10 is rigidly held to the base 41.

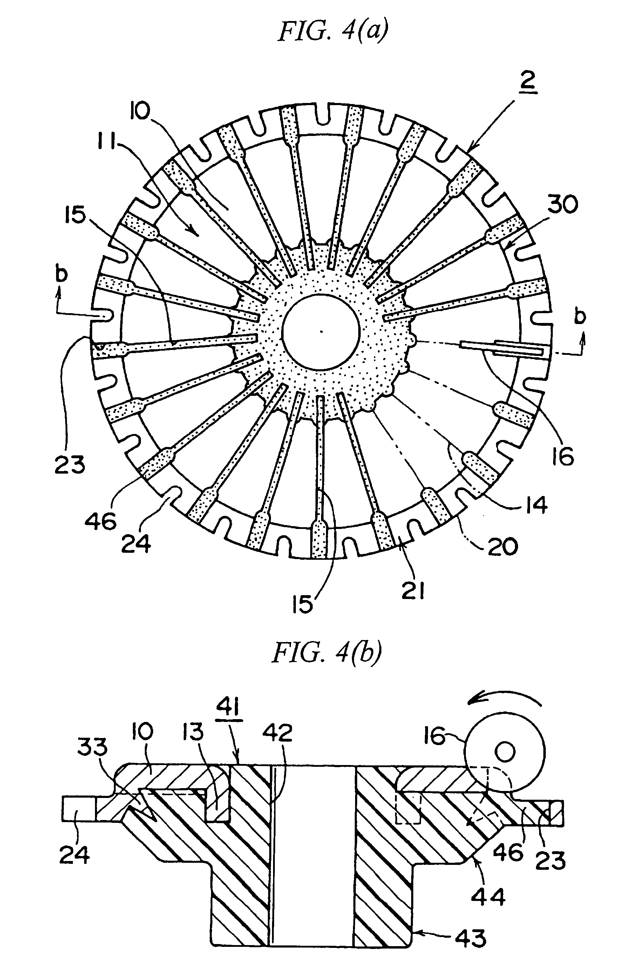

Subsequently, the outer frame 3 of the molded product 40 is moved away as the three suspension bridges 4 are cut. After separating the outer frame 3, the resin of the slits 23 is cut along the outer peripheral edge of the riser section 21 to produce a ring shaped assembly as shown in FIG. 4. As a result, the risers 20 of the riser section 21 are integrally linked to the respective segments 10. Note that each of the risers 20 is electrically insulated from each other by the reinforcements formed in the slits 23.

In the molding step of producing the base, the molded product 40 having a configuration as described above is moved away from the outer frame 3 by cutting the three suspension bridges 4. Then, in the subsequent slit forming step, slits 15 are radially cut along the respective imaginary radial slit lines 14 by means of a slit cutter 16 as shown in FIGS. 4A and 4B. FIGS. 4A and 4B schematically illustrate the slit forming step of cutting a slit on the blank, FIG. 4A being a schematic plan view, FIG. 4B being a schematic cross sectional front view taken along line b-b in FIG. 4A.

Referring to FIGS. 4A and 4B, the slit cutter 16 is typically a thin disk-shaped grinder and applied to the slits 23 on a one by one basis. Then, it is driven radially and inwardly from the slit 23 toward the center of the segment section 11 to actually produce a slit 15 on the imaginary slit line 14. Note that the outer peripheral edge of the slit cutter 16 is held away from the upper surface 22 of the riser section 21 so that only the segment section 11 is cut. Note that the segment section 11 is cut into segments 10 by the slits 15, however, the segments 10 are held together in position because the segments 10 are held to the base 41 respectively by means of the anchors 13 and 33.

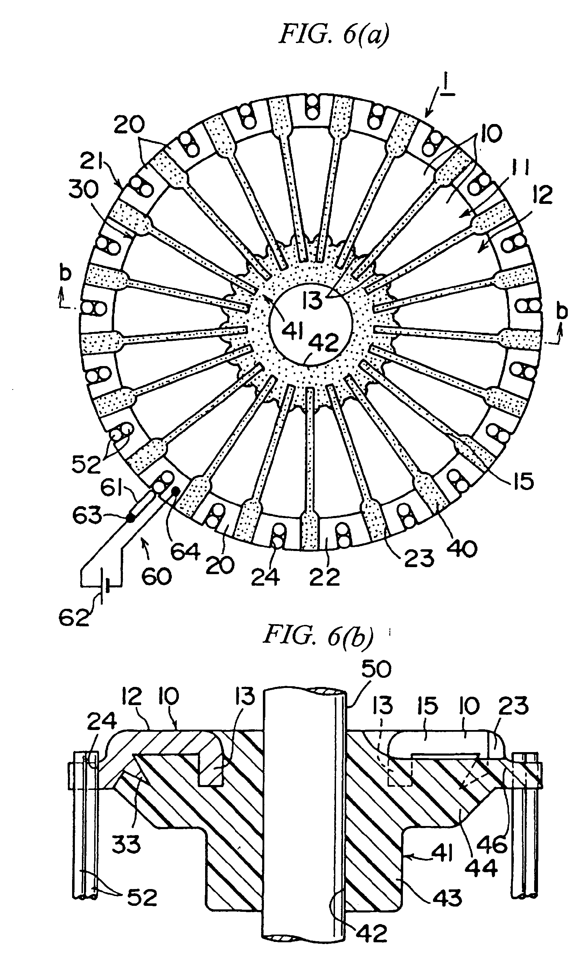

Then, in the subsequent fusing step, two opposite ends 52 (to be referred to as terminals hereinafter) of a coiled wire of the armature 51 are put into the groove of each of the risers 20. Then, they are fused as shown in FIGS. 6A and 6B to electrically connect the risers 20. FIGS. 6A and 6B schematically illustrate the fusing step, FIG. 6A being a schematic plan view, FIG. 6B being a schematic cross sectional front view taken along line b-b in FIG. 6A.

As shown in FIGS. 6A and 6B, the two terminals 52 are inserted into a specified groove 24 in advance. Then, they are fused together by applying a high frequency voltage by means of the fusing tool 61 of a fusing apparatus 60 while they are pressed against the walls of the groove 24. More specifically, a pair of electrodes 63, 64 connected to the power source 62 of the fusing apparatus 60 are electrically connected to the fusing tool 61 and the riser 20 having the groove 24 and a voltage applied thereto. The fusing tool 61 is inserted into the groove 24 and pushed radially and inwardly.

As the terminals 52 are pushed into the groove 24 by the fusing tool 61, the lateral walls of the groove 24 are subjected to a force trying to move them apart peripherally and broaden the groove 24. If the slits 23 at the lateral ends of the riser 20 were not filled with resin, the slits 23 on the lateral sides of the riser 20 would be narrowed and eventually reduced to nil by the force at the lateral sides of the groove 24 to short circuit the riser 20 and the adjacently located risers 20, 20.

However, since reinforcements 46 are formed in the respective the slits 23 by filling the latter with resin in this embodiment, the slits 23 on the lateral sides of the riser 20 are not narrowed to become nil by the force trying to broaden the groove 24 so that the riser 20 and the adjacently located risers 20, 20 would not become short circuited. Thus, the riser 20 that is electrically connected to the thermals 52 in the groove 24 by fusing remains electrically isolated from the adjacent risers.

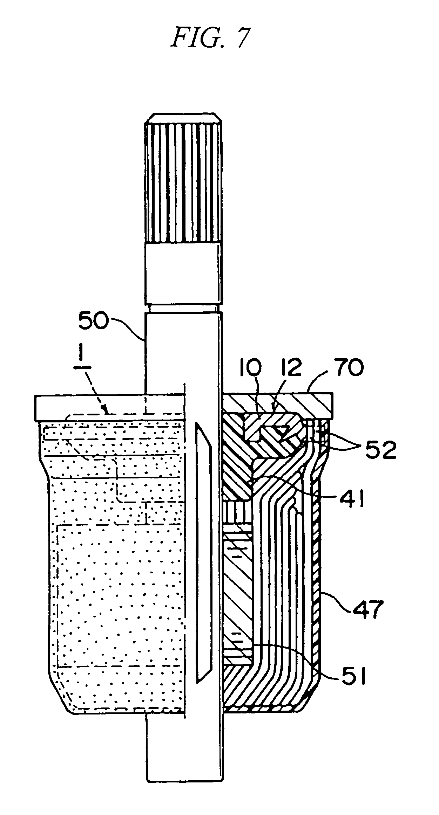

Then, in the subsequent coating step, the entire surface of the embodiment is coated with a resin material 47 that is an electric insulator except the brush contact surface 12. FIG. 7 is a partly cut out schematic front view of a commutator during the coating step.

As shown in FIG. 7, when the embodiment is coated with a resin material 47, the brush contact surface 12 is masked by a masking jig 70 in order to prevent the resin material 47 from adhering, if partly, to the brush contact surface 12.

If the upper surface 22 of the riser section 21 is flush with the brush contact surface 12 and the fused terminals 52 in the grooves 24 of the risers 20 are projecting upward from the brush contact surface 12, the upper ends of the terminals 52 projecting from the brush contact surface 12 can interfere with the masking jig 70 masking the brush contact surface 12. Then, as a result of such interference, a gap may be formed between the masking jig 70 and the brush contact surface 12. Then, the resin material 47 for forming a protection film can flow into the gap and adhere to the brush contact surface 12. This means that isolation material adhere to the brush contact surface 12.

This problem may be avoided by cutting the upper end portions of the terminals 52 projecting from the upper surface 22 before masking the brush contact surface 12 by means of a masking jig 70. However, the terminals 52 have been mollified by the fusing operation so that fins can be produced there when the upper end portions of the terminals are cut. Additionally, if a gap is produced between the masking jig 70 and the brush contact surface 12 by such fins, the resin material 47 can flow into the gap during the coating step and the isolation material adhere to the brush contact surface 12. All in all, a step of removing the fins that might have been produced by the terminals 52 is required to completely mask the brush contact surface 12 to consequently increase the total number of steps for manufacturing a commutator.

The upper surface 22 of the riser 20 is recessed from the brush contact surface 12 as shown in FIG. 6. Thus, if the terminals 52 of the coiled wires are projecting from the upper surface 22 of the riser 20, they do not interfere with the operation of putting the masking jig 70 tightly in contact with the brush contact surface 12. Then, any adhesion of the isolation material onto the brush contact surface 12 by infiltration of the coating resin material 47 can reliably be prevented from taking place.

Additionally, with the above embodiment, the terminals 52 of the coiled wire may be projecting from the upper surface of the riser 20 so that a step of cutting the projecting upper end portions of the terminals 52 can be omitted. As a result, the cost of manufacturing a commutator can be reduced and any possible appearance of fins that may otherwise occur as a result of cutting the upper end portions of the terminals 52 that have been mollified by the fusing step can be effectively avoided.

The above described embodiment provides the following advantages.

Firstly, as a result of forming a stepped section between the segment section of the blank and the riser section, segments can be produced with ease by forming slits only in the segment section that is the upper portion of the stepped section. Then, the length of cutting the slits can be reduced to by turn reduce the cutting time required for cutting the slits. Thus, the cost of manufacturing the commutator can be reduced.

Secondly, as a result of filling the inner space of the stepped section separating the segment section and the riser section with the resin material of the base, the segments can be reinforced by the resin material. Thus, a small thickness can be selected for the segments.

Thirdly, as a result of selecting a small thickness for the segments, the centrifugal force of the commutator that appears when the latter is driven to rotate can be reduced. Then, the outer diameter of the commutator can be increased as a function of the reduction of the centrifugal force. When the commutator is allowed to have a large outer diameter, the risers fitted to the outer peripheral edges of the respective segments shows a large peripheral width so that the grooves of the risers are allowed to have a large width. Accordingly, coiled wires having a large diameter can be used for the commutator to consequently enhance the power output of the motor incorporating the commutator. Additionally, with the brush contact surface of the segment section is made to have a large radial dimension, a large brush can be used with the commutator to improve the durability of the brush.

Additionally, as a result of forming a base by molding a resin material before cutting slits into the blank, an adjacently located segments can be reliably insulated from each other by the slit located between them.

Still additionally, as a result of forming reinforcements by filling the preliminary slits with resin, the risers can be prevented from being deformed during the operation of fusing the terminals of coiled wires to the lateral walls of the grooves of the risers. Thus, any possible short circuiting of adjacently located risers due to the fusing operation can be effectively eliminated.

Still additionally, as a result of recessing the upper surface of the riser section from the brush contact surface, a coating jig can be reliably and tightly brought into contact with the brush contact surface to form a protection film on the latter without interference of the terminals of coiled wires even if the terminals of coiled wires are projecting upwardly from the upper surface of the riser. Thus, any possible infiltration and adhesion of the coating material that is an electric insulator onto the brush contact surface can be reliably eliminated.

Furthermore, as the terminals of coiled wired are allowed to be projecting from the upper surface of the riser, the upper end portions thereof are not required to be cut. As a result, the cost of manufacturing a commutator can be reduced and any possible appearance of fins that may otherwise occur as a result of cutting the upper end portions of the terminals that have been mollified by the fusing step can be effectively avoided.

Finally, as a result of arranging outer anchors that are projecting inwardly to the stepped section, the outer anchors and hence the segments can be rigidly held to the base.

Detailed description has hereinabove been given of the invention achieved by the present inventor with reference to the embodiment. However, the present invention should not be limited to the embodiment described above, and may be variously modified within the scope of the claims.

For example, not a single blank but a plurality of blanks may be arranged continuously on an outer frame.

Additionally, in place of forming outer anchors on the stepped section by cutting, an annular groove may be formed in the inner peripheral surface of the stepped section by cutting or stamping press.

Still additionally, in place of forming inner anchors on the inner peripheral edge of the segment section by cutting, an annular groove may be formed in the inner peripheral surface of the segment section by cutting.

A commutator according to the invention can be used not only for a stator motor but also for a motor of some other type.

## Claims

1. A commutator comprising a plurality of segments (10) arranged annularly and insulated from each other, said segments (10) being integrally held on a base (41) formed by molding a synthetic resin material, and having risers (20) arranged along the outer peripheral edges of the respective segments (20) and connected to respective coiled wires, wherein:
- a brush contact surface (12) of the plurality of segments (10) is a plane perpendicular relative to a rotary axis;
- a plane (22) including said risers (20) is axially recessed from the brush contact surface (12) of said plurality of segments (10); and
- each of the risers (20) is provided with a radial groove (24) and said coiled wire is inserted into the groove (24) and fused to the lateral walls of the groove (24).
**CHARACTERIZED IN THAT**:
- the height (H) of the brush contact surface (12) from the plane (22) including said risers (20) is greater than the thickness (t) of the segments (20); and
- a radially oblong preliminary slit (23) is provided between each pair of adjacently located risers (20) and reinforcements are formed by filling the preliminary slits (23) with the resin material of the base (41).

2. A commutator according to claim 1, wherein each of said segments is provided with an anchor (33) on the inner surface of a stepped section (30) separating the plane including the risers (20) and the brush contact surface (12) of the plurality of segments (10) and said anchor is rigidly secured to the base (41).

3. A method of manufacturing a commutator, comprising steps of:
(a) preparing a blank(2) made of an electrical conductive material and concentrically forming a segment section (11) of a plurality of segments (10) arranged in a predetermined manner and a riser section (21) of a plurality of risers (20) also arranged in a predetermined manner, with a stepped section (11) arranged along the boundary of said segment section (11) and said riser section (21);
(b) forming a base (41) integrally with said blank (2) by molding synthetic resin;
(c) forming a plurality of slits (15) in said segment section (11) by cutting the blank (2), the number of the slits being same as that of the segments (10);
(d) fusing the terminals of an armature coil to each of the risers (20); and
(e) coating the surface of the commutator with synthetic resin except at least the brush contact surface (12) of said segment section (11).
**CHARACTERIZED BY**:
(f) the step, prior to forming said base (41), of forming preliminary slits (23) in said riser section (21), between each pair of adjacently located risers (20), along imaginary lines (14) for said slits (15); and
(g) filling the preliminary slits (23) by molding said synthetic resin of said base (41) therein.

4. A method of manufacturing a commutator according to claim 3, further comprising a step of forming a groove (24) for receiving a coiled wire in each of the risers (32) from the outer periphery thereof.

## Patentansprüche

1. Kommutator mit einer Mehrzahl von Segmenten (10) die ringförmig angeordnet und voneinander isoliert sind, wobei die Segmente (10) integral auf einer Basis (41) gehalten sind, gebildet durch Formen eines Kunstharzmaterials und die Steiger (20) aufweisen, die entlang der Umfangsränder der entsprechenden Segmente (20) ausgebildet und mit den entsprechend gewickelten Drähten verbunden sind, wobei:
- eine Bürstenkontaktoberfläche (12) der Mehrzahl der Segmente (10) sich in einer Ebene senkrecht bezüglich einer Drehachse befindet;
- eine Ebene (22), die die Steiger (20) enthält, ist axial von der Bürstenkontaktoberfläche (12) der Mehrzahl der Segmente (10) vertieft angeordnet ist;
- ein jeder der Steiger (20) mit einer radialen Nut (24) versehen ist, und der gewickelte Draht in die Nut (24) eingesetzt ist, und mit den Seitenwänden der Nut (24) verschmolzen ist,
**dadurch gekennzeichnet, dass**:
- die Höhe (H) der Bürstenkontaktoberfläche (12) ausgehend von der Ebene (22) die die Steiger (20) enthält, größer ist als die Dicke (t) der Segmente (20); und
- ein radial länglicher vorläufiger Schlitz (23) zwischen einem jeden Paar von benachbart angeordneten Steigern (20) vorgesehen ist, und Verstärkungen gebildet werden, durch Füllen der vorläufigen Schlitze (23) mit dem Harzmaterial der Basis (41).

2. Kommutator nach Anspruch 1, wobei ein jedes der Segmente mit einem Anker (33) an der Innenoberfläche eines abgestuften Abschnitts (30) vorgesehen ist, der die Ebene, die die Steiger (20) umfasst und die Bürstenkontaktoberfläche (12) der Mehrzahl der Segmente (10) trennt und der Anker starr an der Basis (41) befestigt ist.

3. Verfahren zum Herstellen eines Kommutators, das die Schritte aufweist:
a) Vorbereiten eines Rohlings (2) gebildet aus einem elektrisch leitenden Material und konzentrisches Bilden einer Segmentsektion (11) mit einer Mehrzahl von Segmenten (10), die in vorbestimmter Weise angeordnet sind, sowie einer Steigersektion (21) mit einer Mehrzahl von Steigern (20), die auch in vorbestimmter Weise angeordnet sind, mit einem abgestuften Abschnitt (11) der um die Grenze der Segmentsektion (11) und der Steigersektion (21) angeordnet ist;
b) Bilden einer Basis (41) integral mit dem Rohling (2) durch Spritzgießen von Kunstharz;
c) Bilden einer Mehrzahl von Schlitzen (15) in der Segmentsektion (11) durch Schneiden des Rohlings (2), wobei die Anzahl der Schlitze (15) gleich jener der Segmente (10) ist;
d) Fixieren der Enden eines Armaturencoils an einen jeden der Steiger (20);
e) Beschichten der Oberfläche des Kommutators mit Kunstharz bis auf wenigstens die Bürstenkontaktoberfläche (12) der Segmentsektion (11),
**gekennzeichnet durch**:
f) den Schritt, vor dem Bilden der Basis (41), des Bildens von vorläufigen Schlitzen (23) in der Steigersektion (21) zwischen einem jeden Paar von benachbart angeordneten Steigern (20), entlang imaginärer Linien (14) für diese Schlitze (15);
g) Befüllen der vorläufigen Schlitze (23) **durch** Spritzgießen des Kunstharzes der Basis (41) darin.

4. Verfahren zum Herstellen eines Kommutators, nach Anspruch 3, das weiterhin einen Schritt zum Bilden einer Nut (24) zur Aufnahme eines gewickelten Drahtes in einen jeden der Steiger (32) von dessen äußeren Umfangs aus.

## Revendications

1. Collecteur comportant une pluralité de segments (10) agencés de manière annulaire et isolés les uns des autres, lesdits segments (10) étant maintenus d'un seul tenant sur une base (41) formée par moulage d'une matière de résine synthétique et ayant des réhausseurs (20) agencés le long des bords périphériques extérieurs des segments (20) respectifs et connectés aux câbles bobinés respectifs, dans lequel :
- une surface de contact de balai (12) de la pluralité de segments (10) est un plan perpendiculaire par rapport à un axe de rotation ;
- un plan (22) incluant lesdits réhausseurs (20) est enfoncé axialement depuis la surface de contact de balai (12) de ladite pluralité de segments (10) ; et
- chacun des réhausseurs (20) est muni d'une gorge radiale (24) et ledit câble bobiné est inséré dans la gorge (24) et est fondu aux parois latérales de la gorge (24),
**CARACTERISE EN CE QUE** :
- la hauteur (H) de la surface de contact de balai (12) depuis le plan (22) incluant lesdits réhausseurs (20) est plus grande que l'épaisseur (t) des segments (20) ; et
- une fente préliminaire radialement oblongue (23) est agencée entre chaque paire de réhausseurs situés de manière adjacente (20) et des renforcements sont formés par remplissage des fentes préliminaires (23) avec la matière de résine de la base (41).

2. Collecteur selon la revendication 1, dans lequel chacun desdits segments est muni d'une ancre (33) sur la surface intérieure d'un tronçon en gradin (30) séparant le plan incluant les réhausseurs (20) et la surface de contact de balai (12) de la pluralité de segments (10) et ladite ancre est fixée de manière rigide sur la base (41).

3. Procédé de fabrication d'un collecteur, comportant les étapes consistant à :
(a) préparer une ébauche (2) constituée d'un matériau électriquement conducteur et former concentriquement un tronçon de segments (11) constitué d'une pluralité de segments (10) agencés d'une manière prédéterminée et un tronçon de réhausseurs (21) constitué d'une pluralité de réhausseurs (20) également agencés d'une manière prédéterminée, un tronçon en gradin (11) étant agencé le long de la limite dudit tronçon de segments (11) et dudit tronçon de réhausseurs (21) ;
(b) former une base (41) d'un seul tenant avec ladite ébauche (2) en moulant une résine synthétique ;
(c) former une pluralité de fentes (15) dans ledit tronçon de segments (11) en découpant l'ébauche (2), le nombre de fentes étant le même que celui des segments (10) ;
(d) faire fondre les bornes d'une bobine d'induit sur chacun des réhausseurs (20) ; et
(e) revêtir la surface du collecteur à l'aide d'une résine synthétique à l'exception d'au moins la surface de contact de balai (12) dudit tronçon de segments (11),
**CARACTERISE EN CE QUE :**
(f) l'étape, avant la formation de ladite base (41), consistant à former des fentes préliminaires (23) dans ledit tronçon de réhausseurs (21), entre chaque paire de réhausseurs situés de manière adjacente (20), le long de lignes imaginaires (14) pour lesdites fentes (15) ; et
(g) remplir les fentes préliminaires (23) en moulant ladite résine synthétique de ladite base (41) dans celles-ci.

4. Procédé de fabrication d'un collecteur selon la revendication 3, comportant de plus une étape consistant à former une gorge (24) pour recevoir un fil bobiné dans chacun des réhausseurs (32) à partir de la périphérie extérieure de ceux-ci.
